# EUROPÄISCHE PATENTSCHRIFT

(11) **EP 3 055 117 B1**
(45) Veröffentlichungstag und Bekanntmachung des Hinweises auf die Patenterteilung: **04.10.2017**
(21) Anmeldenummer: 14784206.6
(22) Anmeldetag: 10.10.2014
(51) Int. Cl.: B29C 47/08, B26D 7/02, B26D 1/56, B29C 49/56, B29C 69/00

(54) **VORRICHTUNG ZUM FIXIEREN VON EXTRUDIERTEM KUNSTSTOFFPROFIL**
DEVICE FOR FIXING EXTRUDED PLASTICS PROFILE
DISPOSITIF PERMETTANT LA FIXATION D'UN PROFILÉ EXTRUDÉ EN MATIÈRE PLASTIQUE

(30) Priorität: 12.10.2013 DE 102013220619
(43) Veröffentlichungstag der Anmeldung: 17.08.2016
(73) Patentinhaber: battenfeld-cincinnati Germany GmbH, 32547 Bad Oeynhausen (DE)
(72) Erfinder: DEPPE, Carsten, 47906 Kempen (DE); DRÖGE, Jörg, 47647 Kerken (DE)
(86) Internationale Anmeldenummer: PCT/EP2014/071818
(87) Internationale Veröffentlichungsnummer: WO 2015/052338

(56) Entgegenhaltungen:
- WO-A1-2009/134140
- CN-A- 101 767 345
- CN-A- 102 452 097
- US-A- 2 667 356
- US-A1- 2004 149 103

## Beschreibung

Die Erfindung betrifft eine Vorrichtung für die Profilextrusion, die aus mindestens drei Klemmeinrichtungen besteht die äquidistant um den Umfang eines zu extrudierendes Profil angeordnet sind, wobei ein Klemmelement direkt am zu extrudierenden Profil anlegbar ist.

Insbesondere in der Rohrextrusion gibt es unterschiedliche Anforderungen an Teilbereiche während des Extrudierens. So muss beispielsweise der Schmelzestrang nach dem Verlassen des Extruders kalibriert werden, in einen Abkühlbereich geführt werden oder im Vakuumtank nach außen hin abgedichtet werden. In manchen Anwendungsfällen muss das Rohr zum Ablängen eingeklemmt werden. Für all diese Funktionen werden derzeit unterschiedliche Werkzeuge, Abdichtbereiche und Klemmvorrichtungen vorgesehen.

So schlägt zum Beispiel die DE 10 2005 020 296 A1 eine aus mindestens zwei Teilen besteht direkt am zu extrudierenden Profil anlegbare Vorrichtung vor, bei der jedes der zwei Teile mindestens eine Anlagefläche aufweist, die am zu extrudierenden Profil anlegbar ist und die mindestens zwei Teile so angeordnet sind, dass die Anlagefläche der Teile das zu extrudierende Profil umschließen.

Die zwei Teile bilden somit in ihrer Anordnung im Querschnitt eine kreisrunde Öffnung, durch die das zu extrudierende Profil durchgeführt werden kann. Vorteilhafterweise sind die Teile so ausgeführt, dass sie durch einfache Mittel derart verdreht oder verstellt werden können, dass ihre Anlagenfläche einen Auslaß für unterschiedliche Profilquerschnitte bilden. Hierbei ist besonders hervorzuheben, dass diese vorgeschlagene Lösung es ermöglicht, die Vorrichtung während der Produktion, also online, auf einen neuen Querschnitt einzustellen. Dies kann über eine geeignete Maschinensteuerung erfolgen, in dem eine zentrale Verstellung mit dieser in einer Regelverbindung steht.

Die EP 2 085 169 A1 offenbart eine Klemmung für ein extrudiertes Rohr bei der zwei Halbschalen aufeinander zu bewegt werden, um das Rohr zu klemmen. Für unterschiedliche Rohrdurchmesser werden die Halbschalen ausgetauscht.

Aus der OS 2 234 082 ist ein Rohrabschneider bekannt bei dem das Rohr über verstellbare Backen fixiert wird. Die Backen werden über Schraubenbolzen eingestellt.

Eine fliegende Formmaschine wie sie in der US 5,224,368 beschrieben wird offenbart eine Klemmung bei der über einen hydraulische Antrieb ein Backenmechanismus in Form eines Kniehebels betrieben wird, um ein Rohr zu klemmen.

Weiterhin findet sich im Stand der Technik die CN 102 452 097 A
sich auf ein Rohrschneidegerät mit automatisch variabler Durchmesseranpassung die einen Rahmen und einen Stützmechanismus, einen Klemmmechanismus und eine auf dem Rahmen der Reihe angeordneten Drehmechanismus und eine Mehrzahl von Klemmkraftarme mit einem Klemmblock umfasst. Bei einer Änderung der Spezifikationen der Rohre müssen die Spannvorrichtung und die Klemmblöcke nicht verändert werden.

Der Erfindung liegt nun die **Aufgabe** zugrunde, derartige Klemmvorrichtungen weiterzuentwickeln, wobei möglichst energie- und umweltbewusst mit der eingesetzten Energie umzugehen ist, weiterhin soll die Vorrichtig möglichst einfach bauen. Diese Aufgabe wird durch eine Vorrichtung mit den Merkmalen gemäß dem Anspruch 1 gelöst. Durch diese Ausgestaltung ist sichergestellt, dass alle um das Rohr angeordneten Klemmeinrichtungen gleichzeitig verstellt werden, wodurch eine zentrische Lage des Rohres um die Extrusionsachse gewährleistet wird. Es kann somit keine der Klemmungen vor oder nachlaufen Fortbildungsgemäß ist vorgesehen, dass drei bis acht Klemmeinrichtungen äquidistant um das Profil angeordnet sind. Mit zwei Klemmeinrichtungen wird das Rohr bereits fest gehalten, mit drei Klemmeinrichtungen ausreichend zentriert. Mit mehr als drei Klemmeinrichtungen wird eine noch bessere Lagefixierung des Rohres erreicht.

Weiterbildungsgemäß wird vorgeschlagen, dass über den Antrieb alle Klemmelemente aller angeordneten Klemmeinrichtungen bewegbar sind wodurch alle Klemmelement synchron verstellt werden, da über die Kopplung keines der Klemmeinrichtungen vor oder nachlaufen kann. Erfindungsgemäß ist die Koppeleinrichtung eine Gelenkwelle mit angeordnetem Getriebe und die Klemmelemente sind mit einer Zahnstange verbunden.

In den Zeichnungen wird schematisch eine erfindungsgemäße Vorrichtung gezeigt:
Fig. 1 zeigt eine typische Extrusionslinie
Fig. 2 den Teil der Klemmvorrichtung

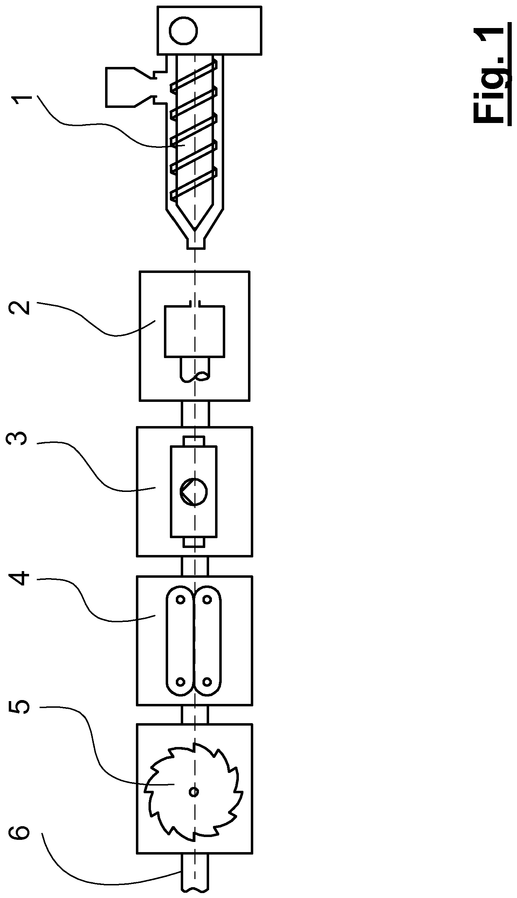

Figur 1 zeigt eine typische Extrusionslinie, wie sie heute für die Profilextrusion, egal, ob für die Produktion von Fensterprofilen oder Rohren, zum Einsatz kommt. Sie zeigt einen Extruder 1, in dem Kunststoff aufgeschmolzen wird, und kontinuierlich zur Formgebung ins Extrusionswerkzeug 2 gefördert wird. Daran schließt sich eine Kalibrier- und Kühlstation 3 an, je nach Profil können weitere Kühlstationen eingesetzt werden. Nach den Kühlstationen schließt sich eine Abzugsvorrichtung 4 an. Um die Endlosprofile 6 auf die gewünschte Länge abzuschneiden ist anschließend eine Trennvorrichtung 5 angeordnet.

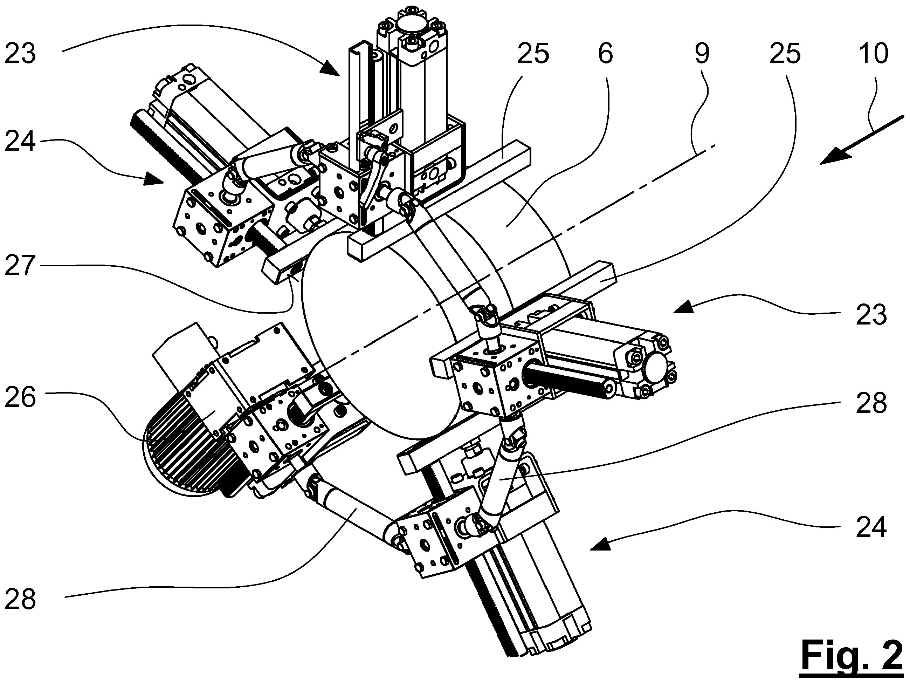

Figur 2 zeigt eine schematische Darstellung der erfindungsgemäßen Klemmvorrichtung. Sie wird vorzugsweise im Bereich der Trennvorrichtung 5 zum Einsatz gelangen, damit das abzulängende Profil 6 bei Trennvorgang selbst fixiert ist. Es ist aber auch denkbar die vorgeschlagene Klemmvorrichtung an einer anderen Stelle der Extrusionslinie eizusetzen, wo eine Fixierung des Profils erforderlich ist. Besonders gut einsetzbar ist die Vorrichtung zum Fixieren von Rohren, da deren Profilquerschnitt kreisrund ist.

Um die Extrusionsachse 9 entlang der Extrusionsrichtung 10 ist ein Teil des Profils 6 dargestellt. Das Profil 6 wird über Klemmeinrichtungen in seiner Lage fixiert. Hierzu sind mehrere der Klemmeinrichtungen am Umfang des Profils 6 verteilt angeordnet. Alle angeordneten Klemmeinrichtungen sind über Koppeleinrichtungen 28 unter einander verbunden, wobei die Koppeleinrichtung 28 jeweils eine erste Klemmeinrichtung 23 mit einer benachbarten zweiten Klemmeinrichtung 24 verbindet.

Jede der angeordneten Klemmeinrichtungen verfügt über ein Klemmelement 25 dessen Anlagefläche 27 an der Außenfläche des Profils 6 anlegbar ist. Jede der Klemmeinrichtungen verfügt über einen Stellmotor, der erfindungsgemäß ein Servomotor ist, um das Klemmelement radial zur Extrusionsachse 9 zu bewegen. Eine der Klemmeinrichtungen ist mit einem Antrieb 26 ausgestattet der die Hauptsteuerung der Klemmeinrichtungen übernimmt. Ähnlich einer Server/Client Lösung richten sich die weiteren Klemmeinrichtungen, die über die Koppeleinrichtung 28 verbunden sind, nach dem Antrieb 26. Durch diese Ausgestaltung ist sichergestellt, dass alle um das Rohr 6 angeordneten Klemmeinrichtungen synchron verstellt werden, wodurch eine zentrische Lage des Rohres 6 um die Extrusionsachse 9 gewährleistet wird.

### Bezugszeichenliste:

- 1: Extruder
- 2: Extrusionswerkzeug
- 3: Kalibrier- und Kühltank
- 4: Abzugsvorrichtung
- 5: Trennvorrichtung
- 6: Profil

- 23: erste Klemmeinrichtung
- 24: zweite Klemmeinrichtung
- 25: Klemmelement
- 26: Antrieb für 23 und 24
- 27: Anlagefläche von 25
- 28: Koppeleinrichtung zwischen 23 und 24

## Patentansprüche

1. Vorrichtung für die Profilextrusion, die aus mindestens drei Klemmeinrichtungen (23, 24) besteht die äquidistant um den Umfang eines zu extrudierendes Profil (6) angeordnet sind,
wobei ein Klemmelement (25) jeder Klemmeinrichtung (23,24) direkt am zu extrudierenden Profil (6) anlegbar ist,
**dadurch gekennzeichnet, dass**
das Klemmelement (25) in jeder der Klemmeinrichtungen (23, 24) angeordnet ist und
die Klemmelemente (25) über je einen Servomotor radial zur Extrusionsachse (9) bewegbar sind,
wobei jede Klemmeinrichtung (23) mit der benachbarten Klemmeinrichtung (24) über eine Koppeleinrichtung (28) verbunden ist,
wobei die Koppeleinrichtung (28) als Gelenkwelle mit angeordnetem Getriebe ausgeführt ist,
wobei eine der Klemmeinrichtungen (23, 24) mit einem zusätzlichen Antrieb (26) ausgestattet ist, der die Hauptsteuerung der Klemmeinrichtungen übernimmt.

2. Vorrichtung nach Anspruch 1, **dadurch gekennzeichnet, dass** drei bis acht Klemmeinrichtungen (23, 24) äquidistant um das Profil (6) angeordnet sind.

3. Vorrichtung nach Anspruch 1 oder 2, **dadurch gekennzeichnet, dass** über den Antrieb (26) alle Klemmelemente (25) aller angeordneten Klemmeinrichtungen bewegbar sind.

4. Vorrichtung nach einem der vorigen Ansprüche, **dadurch gekennzeichnet, dass** die Klemmelemente (25) mit einer Zahnstange verbunden sind.

## Claims

1. Apparatus for profile extrusion, comprising at least three clamping devices (23, 24) arranged equidistantly around the perimeter of a profile to be extruded, a clamping element (25) of each clamping device (23, 24) being able to be placed directly against the profile to be extruded,
**characterized in that**
the clamping element (25) is arranged in each of the clamping devices (23, 24), and that
the clamping elements (25) are movable radially to the axis of extrusion (9) by means of a servo motor,
each clamping device (23) being connected to the adjacent clamping device (24) by a coupling device (28),
the coupling device (28) being designed as a transmission shaft fitted with a gear,
one of the clamping devices (23, 24) featuring an additional drive (26) that functions as the main controller.

2. Apparatus according to claim 1, **characterized in that** three to eight clamping devices (23, 24) are arranged equidistantly around the profile (6).

3. Apparatus according to claim 1 or 2, **characterized in that** all clamping elements (25) of all the arranged clamping devices (23, 24) are movable via the drive.

4. Apparatus according to one of the preceding claims, **characterized in that** the clamping elements (25) are connected by a rack.

## Revendications

1. Appareil pour l'extrusion de profiles comprenant au moins trois dispositifs de serrage (23, 24) qui sont disposés de manière équidistante autour le périmètre d'un profile à extruder (6),
un élément de serrage (25) étant adapté de façon à reposer directement contre le profile à extruder (6),
**caractérisé en ce que**
l'élément de serrage (25) est disposé dans chaque dispositif de serrage (23, 24) et que
les éléments de serrage (25) peuvent être déplacés radialement par rapport à l'axe d'extrusion (9) par un servomoteur,
chaque dispositif de serrage (23) étant relié au dispositif de serrage adjacent (24) par un dispositif de couplage (13),
le dispositif de couplage (13) étant conçu comme un arbre à cardan équipé d'une transmission,
un des dispositifs de serrage (23, 24) étant équipé d'un système d'entraînement qui sert de contrôleur principal du dispositif de serrage.

2. Appareil selon revendication 1, **caractérisé en ce qu'**entre trois et huit dispositifs de serrage (23, 24) sont disposés de manière équidistante autour le profile (6).

3. Appareil selon revendication 1 ou 2, **caractérisé en ce que** tous les éléments de serrage (25) dans tous les dispositifs de serrage (23, 24) peuvent être déplacés par le système d'entraînement.

4. Appareil selon l'une quelconque des revendications précédentes, **caractérisé en ce que** les éléments de serrage (25) sont connectés par une crémaillère.
